# EUROPÄISCHE PATENTSCHRIFT

(11) **EP 0 882 538 B1**
(45) Veröffentlichungstag und Bekanntmachung des Hinweises auf die Patenterteilung: **17.03.2004**
(21) Anmeldenummer: 98108238.1
(22) Anmeldetag: 06.05.1998
(51) Int. Cl.: B23K 11/31

(54) **Schweisszange und Verfahren zur Herstellung einer Kraftfahrzeugkarosserie**
Welding gun and body car manufacturing method
Pinces de soudage et méthode de fabrication de carosseries d'automobiles

(30) Priorität: 09.05.1997 DE 19719570
(43) Veröffentlichungstag der Anmeldung: 09.12.1998
(73) Patentinhaber: Volkswagen Aktiengesellschaft, 38436 Wolfsburg (DE)
(72) Erfinder: Gnass, Rainer, 38459 Mackendorf (DE); Benthe, Gerd-Peter, 38442 Wolfsburg (DE)
(74) Vertreter: Fritz, Edmund Lothar, Dipl.-Chem.

(56) Entgegenhaltungen:
- BE-A- 440 726
- FR-A- 2 403 152
- US-A- 4 727 238

## Beschreibung

Die Erfindung bezieht sich auf ein Verfahren nach dem Oberbegriff des Anspruchs 1 sowie eine Schweißzange zur Durchführung des Verfahrens.

Um vorzeitiges Rosten der Fahrzeuge zu vermeiden, kommen bei der Fertigung von Kraftfahrzeugkarosserien zunehmend verzinkte Bleche zum Einsatz, die bereits im verzinkten Zustand vom Blechhersteller angeliefert werden. Die Montage derartiger Bleche und Blechpreßteile erfolgt üblicherweise durch Punktschweißung (elektrische Widerstandsschweißung). Infolge der örtlichen Hitzeentwicklung bei den Schweißvorgängen kommt es an den Schweißstellen zu einer (zumindest teilweisen) Verbrennung der Zinkbeschichtung und des Schutzölfilms. Hierbei entstehen toxische Rauchgase, die beim bisherigen Stand der Technik durch Absaugvorrichtungen, bestehend aus großvolumigen Absaughauben, Ventilatoren und Blechkanälen, entfernt werden. Die herkömmlichen Absaugvorrichtungen sind in der Herstellung aufwendig und teuer und benötigen wegen der Größe ihrer Bestandteile viel Platz. Darüber hinaus arbeiten sie einerseits äußerst kostenintensiv, besitzen andererseits aber einen nur vergleichsweise niedrigen Wirkungsgrad. Erfahrungen haben gezeigt, daß in vielen Fällen die vorgeschriebenen MAK-Werte nur bedingt eingehalten werden können.

Aufgabe der Erfindung ist es, eine kostengünstige, raumsparende und zugleich effiziente Absaugung der beim Punktschweißen von Blechteilen, insbesondere solchen mit Zinkbeschichtung, entstehenden Rauchgase zu bewerkstelligen.

Gemäß der Erfindung wird die Aufgabe mit einem Verfahren gemäß Anspruch 1 sowie mit eine Schweißzange gemäß Anspruch 3 gelöst. Durch die erfindungsgemäße Absaugung in unmittelbarer Nähe des Entstehungsortes der Rauchgase ist es nicht nur gelungen, die oben geschilderten Nachteile bisheriger Absaugvorrichtungen zu vermeiden, sondern darüber hinaus eine zusätzliche Kühlung des in der Schweißzange vorgesehenen Kühlwasserkreislaufes zu erreichen.

Erfahrungen zeigen, daß bei dieser neuartigen Absaugtechnik Schweißrauchgase bis zu einer Entfernung von ca. 30 cm erfaßt werden. Aufgrund der im Karosseriebau üblichen dichten Punktschweißfolge, wird somit auch der Nachbrand zurückliegender Punkte wirksam abgesaugt.

Vorteilhafte Weiterbildungen der Erfindung offenbaren die Ansprüche 2 und 4-8.

In der Zeichnung sind Ausführungsbeispiele der Erfindung dargestellt, die im folgenden beschrieben werden. Es zeigt (jeweils schematisch):
- Fig. 1: eine Ausführungsform einer Punktschweißzange, in Seitenansicht,
- Fig. 2: einen Schnitt längs der Linie II - II in Fig. 1,
- Fig. 3: eine andere Ausführungsform einer Punktschweißzange, in Schnittdarstellung entsprechend Fig. 2, und
- Fig. 4: eine weitere Ausführungsform einer Punktschweißzange, in Schnittdarstellung entsprechend Fig. 3.

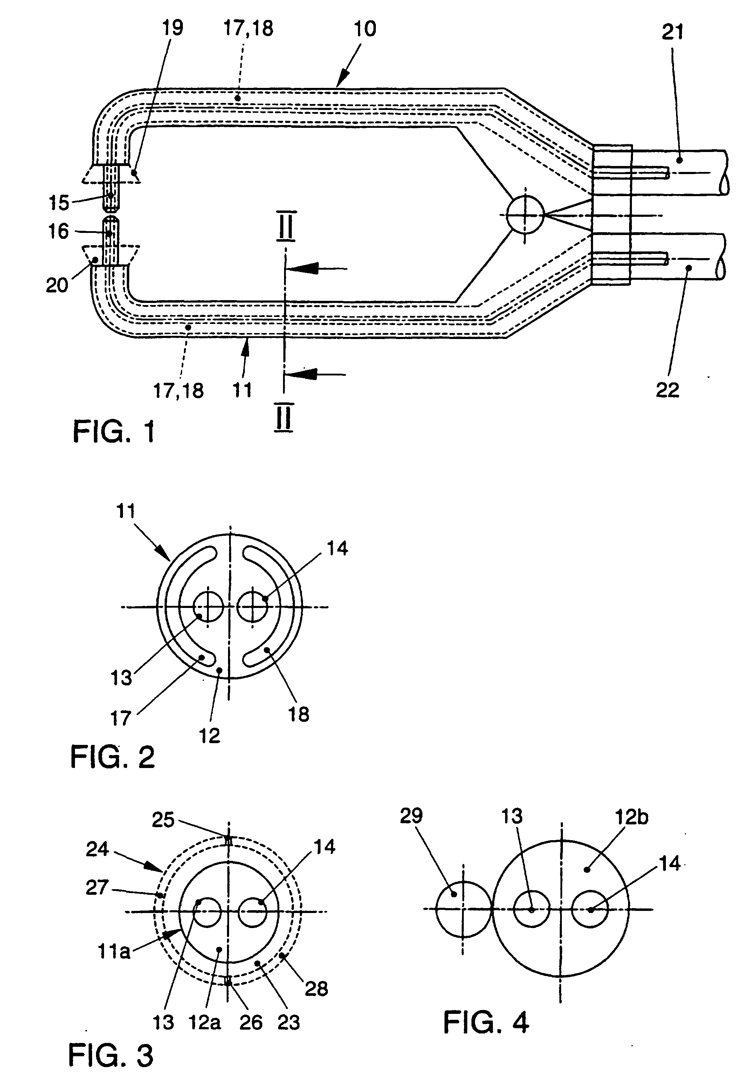

In Fig. 1 bezeichnen 10, 11 die beiden Schweißzangenarme der betreffenden Punktschweißzange, die aus Gründen der Übersichtlichkeit ohne elektrische Stromzuführung, Drucklufteinspeisung und ohne Steuerelemente dargestellt ist. Wie aus Fig. 2 zu erkennen ist, bestehen die Schweißzangenarme 10, 11 aus einem Vollmaterial 12, in das Kühlwasserkanäle 13, 14 (Vor- und Rücklauf), eingearbeitet sind. An ihren freien abgewinkelten Enden tragen die Schweißzangenarme 10, 11 Elektroden 15, 16 (sog. Schweißkappen).

Wie insbesondere aus Fig. 2 ersichtlich ist, sind in das Vollmaterial 12 der Schweißzangenarme des weiteren 2 Absaugkanäle 17, 18 eingeformt, die im Querschnitt Teilkreisform aufweisen. Sie münden jeweils in einen gemeinsamen Sauglufteinlaß 19 bzw. 20. Durch die Trichterform der Sauglufteinlässe 19, 20 wird ein guter Ansaugwinkel gewährleistet. Am rückwärtigen Ende der Punktschweißzange werden die Absaugkanäle 17, 18 in zwei Unterdruckschläuchen 21, 22 zusammengeführt. Der Anschluß an eine (zentrale) Unterdruckleitung kann über einen T-förmigen Abgang oder ähnlich erfolgen (nicht gezeigt).

Bei der Ausführungsform nach Fig. 3 erstreckt sich ein hier im Querschnitt ringförmiger und mit 23 bezeichneter Absaugkanal zwischen einem den Schweißzangenarm 11a rohrartig umschließenden äußeren Ansaugmantel 24 und dem die Kühlwasserkanäle 13, 14 enthaltenden Vollmaterial 12a des Schweißzangenarms 11a. Der äußere Ansaugmantel 24 setzt sich aus zwei bei 25, 26 miteinander verschweißten Halbschalen 27, 28 zusammen.

Wie in Fig. 4 dargestellt, kann auch seitlich an dem Vollmaterial 12b ein Absaugkanal 29 angeordnet werden. Die Unterdruckleitung wird vorteilhaft parallel zum Vollmaterial geführt und beispielsweise mit Schellen oder Clipsen mit diesem verbunden. Durch eine seitliche Anordnung des Absaugkanals 29 wird eine günstige Punktschweißführung erreicht.

Die Ausführungsformen nach Fig. 3 oder 4 ermöglichen vorteilhafterweise eine nachträgliche Ausrüstung bereits vorhandener Schweißzangen mit der erfindungsgemäßen integrierten Absaugvorrichtung.

Um ein vollständiges Absaugen der Rauchgase zu gewährleisten, sind Unterdruck, Volumenstrom (der Saugluft) und Absaugkanal-Querschnitte in geeigneter Weise zu dimensionieren und konstruktiv auf die erforderliche Dimensionierung der Schweißzangenarme abzustimmen.

## Patentansprüche

1. Verfahren zur Herstellung einer Kraftfahrzeugkarosserie durch Punktschweißen insbesondere verzinkter Blechteile oder Blechpressteile mittels Schweißzangen, **dadurch gekennzeichnet, dass** Schweißzangen (10, 11; 11a) mit integrierter Absaugvorrichtung (17 bis 28) eingesetzt werden,
wobei die Schweißzangen in den Schweißzangenarmen ein oder mehrere Absaugkanäle (17, 28; 23, 29) mit unmittelbar neben den Schweißelektroden (15, 16) liegendem Sauglufteinlass (19, 20) umfassen,
wobei die Absaugvorrichtung zur Entfernung der beim Punktschweißen entstehenden Rauchgase ausgebildet ist, und wobei der Sauglufteinlass (19, 20) von der Schweißzange zum Schweißpunkt geführt wird.

2. Verfahren nach Anspruch 1, **dadurch gekennzeichnet, dass** bei Stillstand der Punktschweißvorgänge die Absaugvorrichtung (17 - 28) durch eine Taktsteuerung abgeschaltet und bei Wiederaufnahme der Punktschweißvorgänge wieder eingeschaltet wird.

3. Schweißzange (10, 11; 11a) mit integrierter Absaugvorrichtung (17 bis 28) zur Verwendung in einen Verfahren gemäß Anspruch 1 oder 2,
wobei die Schweißzange in den Schweißzangenarmen ein oder mehrere Absaugkanäle (17, 28; 23, 29) mit unmittelbar neben den Schweißelektroden (15, 16) liegendem Sauglufteinlass (19, 20) umfasst,
wobei die Absaugvorrichtung zur Entfernung der beim Punktschweißen entstehenden Rauchgase ausgebildet ist,
wobei der Sauglufteinlass (19, 20) von der Schweißzange zum Schweißpunkt geführt wird, und wobei in den Schweißzangenarme (10,11,11a) kühlwasserkanäle (13,14) eingearbeitet sind.

4. Schweißzange nach Anspruch 3, **dadurch gekennzeichnet, dass** die Absaugkanäle als die Schweißzangenarme (11a) umströmende Ringkanäle (23) ausgebildet und außenseitig jeweils durch einen den Schweißzangenarm (11a) in radialem Abstand rohrartig umschließenden Ansaugmantel (24) begrenzt sind (Fig. 3).

5. Schweißzange nach Anspruch 3, **dadurch gekennzeichnet, dass** die Absaugkanäle (17, 18) unmittelbar in das Vollmaterial (12) der Schweißzangenarme (10, 11) eingearbeitet sind (Fig. 2).

6. Schweißzange nach Anspruch 3, **dadurch gekennzeichnet, dass** der Sauglufteinlass (19, 20) der Absaugkanäle (17, 18; 23) jeweils trichterförmig ausgebildet ist.

7. Schweißzange nach einem der Ansprüche 3 bis 6, **dadurch gekennzeichnet, dass** die Schweißzangenarme (10, 11) aus einem Vollmaterial (12) bestehen, in das die Kühlwasserkanäle (13, 14) eingearbeitet sind.

8. Schweißzange nach Anspruch 7, **dadurch gekennzeichnet, dass** ein im Querschnitt ringförmiger Absaugkanal (23) zwischen einem den Schweißzangenarm (11a) umschließenden äußeren Ansaugmantel (24) und dem die Kühlwasserkanäle (13, 14) enthaltenden Vollmaterial (12a) des Schweißzangenarms (11a) angeordnet ist.

## Claims

1. Method of producing a vehicle body by spot welding in particular galvanized sheet-metal parts or sheet-metal stampings by means of welding guns, **characterized in that** welding guns (10, 11; 11a) having an integrated suction arrangement (17 to 28) are used, the welding guns, in the welding gun arms, comprising one or more suction passages (17, 28; 23, 29) with a suction-air inlet (19, 20) lying directly next to the welding electrodes (15, 16), the suction arrangement being designed for removing the fumes produced during the spot welding, and the suction-air inlet (19, 20) being directed from the welding gun to the welding spot.

2. Method according to Claim 1, **characterized in that** the suction arrangement (17 - 28) is switched off by a timing control when the spot welding operations are stopped and is switched on again after resumption of the spot welding operations.

3. Welding gun (10, 11; 11a) having an integrated suction arrangement (17 to 28) for use in a method according to Claim 1 or 2, the welding gun, in the welding gun arms, comprising one or more suction passages (17, 28; 23, 29) with a suction-air inlet (19, 20) lying directly next to the welding electrodes (15, 16), the suction arrangement being designed for removing the fumes produced during the spot welding, the suction-air inlet (19, 20) being directed from the welding gun to the welding spot, and cooling-water passages (13, 14) being incorporated in the welding gun arms (10, 11; 11a).

4. Welding gun according to Claim 3, **characterized in that** the suction passages are designed as annular passages (23) flowing around the welding gun arms (11a) and are defined on the outside in each case by a suction casing (24) enclosing the welding gun arm (11a) in a tubular manner at a radial distance (Fig. 3).

5. Welding gun according to Claim 3, **characterized in that** the suction passages (17, 18) are incorporated directly in the solid material (12) of the welding gun arms (10, 11) (Fig. 2).

6. Welding gun according to Claim 3, **characterized in that** the suction-air inlet (19, 20) of the suction passages (17, 18; 23) is in each case of funnel-shaped design.

7. Welding gun according to one of Claims 3 to 6, **characterized in that** the welding gun arms (10, 11) are made of a solid material (12), in which the cooling-water passages (13, 14) are incorporated.

8. Welding gun according to Claim 7, **characterized in that** a suction passage (23) which is annular in cross section is arranged between an outer suction casing (24), enclosing the welding gun arm (11a), and the solid material (12a), containing the cooling-water passages (13, 14), of the welding gun arm (11a).

## Revendications

1. Procédé de fabrication d'une carrosserie automobile par soudage par points, notamment de pièces de tôle zinguées ou de pièces façonnées en tôle au moyen de pinces de soudage, **caractérisé en ce que** l'on utilise des pinces de soudage (10, 11; 11a) avec un dispositif d'aspiration intégré (17 à 28),
les pinces de soudage comprenant, dans les bras des pinces de soudage, un ou plusieurs canaux d'aspiration (17, 28 ; 23, 29) avec une entrée d'air d'aspiration (19, 20) se trouvant à proximité immédiate des électrodes de soudage (15, 16),
le dispositif d'aspiration étant réalisé pour éliminer les gaz de fumée se produisant lors du soudage par points,
et l'entrée d'air d'aspiration (19, 20) étant guidée de la pince de soudage au point de soudage.

2. Procédé selon la revendication 1, **caractérisé en ce que** lors de l'arrêt des opérations de soudage par points, le dispositif d'aspiration (17 - 28) est débranché par une commande d'horloge et est à nouveau branché à la reprise des opérations de soudage par points.

3. Pince de soudage (10, 11 ; 11a) comprenant un dispositif d'aspiration intégré (17 à 28) pour l'utilisation dans un procédé selon la revendication 1 ou 2,
dans laquelle la pince de soudage comprend, dans les bras de la pince de soudage, un ou plusieurs canaux d'aspiration (17, 28 ; 23, 29) avec une entrée d'air d'aspiration (19, 20) se trouvant à proximité immédiate des électrodes de soudage (15, 16),
le dispositif d'aspiration étant réalisé pour éliminer les gaz de fumée se produisant lors du soudage par points,
l'entrée d'air d'aspiration (19, 20) étant guidée de la pince de soudage au point de soudage,
et des canaux d'eau de refroidissement (13, 14) étant creusés dans les bras de la pince de soudage (10, 11, 11a).

4. Pince de soudage selon la revendication 3, **caractérisée en ce que** les canaux d'aspiration sont réalisés sous forme de canaux annulaires (23) entourant les bras de la pince de soudage (11a) et sont limités du côté extérieur à chaque fois par une enveloppe d'aspiration (24) entourant à la manière d'un tube avec un espacement radial le bras de la pince de soudage (11a) (figure 3).

5. Pince de soudage selon la revendication 3, **caractérisée en ce que** les canaux d'aspiration (17, 18) sont creusés directement dans le matériau plein (12) des bras de la pince de soudage (10, 11) (figure 2).

6. Pince de soudage selon la revendication 3, **caractérisée en ce que** l'entrée d'air d'aspiration (19, 20) des canaux d'aspiration (17, 18 ; 23) est réalisée dans chaque cas en forme d'entonnoir.

7. Pince de soudage selon l'une quelconque des revendications 3 à 6, **caractérisée en ce que** les bras de la pince de soudage (10, 11) se composent d'un matériau plein (12) dans lequel sont creusés les canaux d'eau de refroidissement (13, 14).

8. Pince de soudage selon la revendication 7, **caractérisée en ce qu'**un canal d'aspiration (23) de section transversale annulaire est prévu entre une enveloppe d'aspiration extérieure (24) entourant le bras de la pince de soudage (11a) et le matériau plein (12a) du bras de la pince de soudage (11a) contenant les canaux d'eau de refroidissement (13, 14).
